# EUROPÄISCHE PATENTSCHRIFT

(11) **EP 3 281 737 B1**
(45) Veröffentlichungstag und Bekanntmachung des Hinweises auf die Patenterteilung: **15.05.2019**
(21) Anmeldenummer: 17183977.2
(22) Anmeldetag: 31.07.2017
(51) Int. Cl.: B23K 11/02, B23K 11/34, B23K 101/00, B23K 11/093, B23K 11/11, F01N 13/18, F01N 13/00, F16B 37/06

(54) **VERFAHREN ZUM VERSCHWEISSEN ZWEIER BAUTEILE, VORZUGSWEISE EINER ABGASANLAGE EINER BRENNKRAFTMASCHINE, MITEINANDER DURCH WIDERSTANDSSCHWEISSEN**
METHOD FOR WELDING TWO COMPONENTS, PREFERABLY OF AN EXHAUST GAS SYSTEM OF A COMBUSTION ENGINE, TO EACH OTHER BY RESISTANCE WELDING
PROCÉDÉ DE SOUDURE PAR RÉSISTANCE DE DEUX ÉLÉMENTS STRUCTURAUX, DE PRÉFÉRENCE D'UNE INSTALLATION DE GAZ D'ÉCHAPPEMENT D'UN MOTEUR À COMBUSTION INTERNE

(30) Priorität: 05.08.2016 DE 102016114556
(43) Veröffentlichungstag der Anmeldung: 14.02.2018
(73) Patentinhaber: Eberspächer Exhaust Technology GmbH & Co. KG, 66539 Neunkirchen (DE)
(72) Erfinder: Manicke, Daniel, 01157 Dresden (DE); Sauer, Andreas, 73054 Eislingen (DE); Pallmann, Jan, 66482 Zweibrücken (DE)
(74) Vertreter: Ruttensperger Lachnit Trossin Gomoll

(56) Entgegenhaltungen:
- DE-A1-102015 216 013
- US-A1- 2006 016 788

## Beschreibung

Die vorliegende Erfindung betrifft ein Verfahren zum Verschweißen zweier Bauteile, vorzugsweise einer Abgasanlage einer Brennkraftmaschine, miteinander durch Widerstandsschweißen.

Aus der nachveröffentlichten deutschen Patentanmeldung DE 10 2015 216 013 ist ein Verfahren bekannt, mit welchem eine Buchse durch Widerstandsschweißen an einer Wandung einer Abgasanlagenkomponente festgelegt werden kann. Die Abgasanlagenkomponente kann beispielsweise ein Katalysator sein, an dessen Gehäuse eine Buchse zur Aufnahme einer Messsonde, beispielsweise Temperatursensor, durch Verschweißung festzulegen ist.

In der Wandung ist eine Öffnung vorgesehen, durch welche hindurch über die Buchse Zugriff zum Innenraum des Gehäuses erlangt werden kann. An der Buchse ist eine und einen Schweißbereich der Buchse bereitstellende Fläche vorgesehen, welche zur Anlage an einem nach außen umgebogenen, die Öffnung umgebenden und einen Schweißbereich des Gehäuses bereitstellenden Wandungsbereich des Gehäuses zur Anlage gebracht werden kann und durch Widerstandsschweißen daran festgelegt werden kann. Dabei kann eine Längsachse der Buchse bezüglich einer Ebene, in welcher die den Schweißbereich der Buchse bereitstellende Fläche liegt, angewinkelt, also dazu nicht orthogonal orientiert sein, so dass eine an der Buchse festzulegende Messsonde entsprechend geneigt an dem Gehäuse festgelegt werden kann. Die Neigung der Messsonde bezüglich des Gehäuses ist dabei bestimmt durch den Winkel zwischen der Längsachse der Buchse und der Ebene, in welcher die den Schweißbereich der Buchse bereitstellende Fläche liegt.

Bei einer alternativen Ausgestaltungsart ist die den Schweißbereich der Buchse bereitstellende Fläche konisch bzw. kegelstumpfartig ausgebildet, so dass ein diese Fläche aufweisender und den Schweißbereich der Buchse bereitstellender Teil der Buchse zumindest geringfügig in die Öffnung eingreift bzw. eingeführt ist, wenn die daran vorgesehene, kegelstumpfartige Fläche an dem nach außen umgebogenen Bereich der Wandung des Gehäuses anliegt. Bei dieser Ausgestaltung ist eine Längsachse der Buchse parallel zu einer Achse der in der Wandung des Gehäuses vorgesehenen Öffnung orientiert.

DE 10 2015 216013 A1 beschreibt eine Anordnung aus einem Bauteil und einer in eine Bauteilöffnung des Bauteils geradlinig eingebrachten Buchse. Dabei verläuft eine Längsmittelachse der Bauteilöffnung parallel zu einer Längsmittelachse der Buchse, wenn diese in die Bauteilöffnung eingebracht ist.

US 2006/016788 A1 beschreibt eine Anordnung aus einem ersten Bauteil und einem zweiten Bauteil, wobei das zweite Bauteil eine Durchgangsöffnung zur Aufnahme des ersten Bauteils aufweist. Dabei bilden die beiden Bauteile eine gemeinsame Öffnung aus, so dass die beiden Bauteile eine gemeinsame Bauteillängsachse bzw. eine gemeinsame Einführungsöffnungsachse aufweisen.

Es ist die Aufgabe der vorliegenden Erfindung, ein Verfahren zum Verschweißen zweier Bauteile, vorzugsweise einer Abgasanlage einer Brennkraftmaschine, miteinander durch Widerstandsschweißen vorzusehen, bei welchem eine größere Freiheit in der Positionierung der beiden miteinander zu verschweißenden Bauteile bezüglich einander besteht.

Erfindungsgemäß wird diese Aufgabe gelöst durch ein Verfahren gemäß Anspruch 1.

Es wird somit ein Verfahren zum Verschweißen zweier Bauteile, vorzugsweise einer Abgasanlage einer Brennkraftmaschine, miteinander durch Widerstandsschweißen, vorgestellt, umfassend die Maßnahmen:
a) Bereitstellen eines ersten Bauteils mit einer Einführöffnung, wobei die Einführöffnung von einem einen Schweißbereich des ersten Bauteils bereitstellenden Einführöffnungsrand umgeben ist,
b) Bereitstellen eines zweiten Bauteils mit einem in die Einführöffnung des ersten Bauteils einzuführenden Einführbereich, wobei eine Einführbereich-Oberfläche des Einführbereichs einen Schweißbereich des zweiten Bauteils bereitstellt,
c) Einführen des Einführbereichs in die Einführöffnung derart, dass die Einführbereich-Oberfläche im Wesentlichen entlang des gesamten Einführöffnungsrandes an dem ersten Bauteil anliegt,
d) Anlegen einer elektrischen Spannung an die beiden Bauteile zum Widerstandsverschweißen des ersten Bauteils mit dem zweiten Bauteil,
wobei die Einführbereich-Oberfläche um zwei zueinander nicht parallele Achsen gekrümmt ist oder um eine zur Einführbereich-Oberfläche parallele Achse gekrümmt ist, oder/und wobei eine Einführrandkante des Einführöffnungsrandes nicht in einer Ebene liegt.

Zum Ermöglichen einer geneigten Positionierung beispielsweise einer Messsonde bezüglich eines Gehäuses eines Katalysators ist vorgesehen, dass bei der Maßnahme c) das zweite Bauteil derart in die Einführöffnung eingeführt wird, dass die Bauteillängsachse nicht parallel zu einer Einführöffnungsachse der Einführöffnung ist.

Weiterhin ist vorgesehen, dass das zweite Bauteil in Richtung einer Bauteillängsachse langgestreckt ist und in einem Endbereich den Einführbereich aufweist. Dies bedeutet nicht notwendigerweise, dass das zweite Bauteil in dieser Erstreckungsrichtung eine größere Abmessung aufweist, als z.B. der Durchmesser des zweiten Bauteils.

Durch die räumliche Ausgestaltung der miteinander zu verschweißenden Bereiche der beiden Bauteile wird die Möglichkeit geschaffen, dass diese in verschiedenen Positionierungen bezüglich einander angeordnet werden können, gleichwohl jedoch im Wesentlichen entlang des gesamten Einführöffnungsrandes ein Kontakt zwischen den beiden Bauteilen besteht, so dass beim Widerstandsverschweißen in diesem Kontaktbereich der zum Aufschmelzen der Bauteile führende elektrische Strom fließen kann und auch in Kontaktunterbrechungsbereichen, in welchen ein geringfügiger Zwischenraum zwischen den Schweißbereichen der beiden Bauteile vorhanden ist, eine ausreichende Erwärmung und damit ein Aufschmelzen und Verschweißen der beiden Bauteile erreicht werden kann.

Es ist in diesem Zusammenhang darauf hinzuweisen, dass im Sinne der vorliegenden Erfindung die beiden Bauteile in ihren Schweißbereichen dann im Wesentlichen entlang des gesamten Einführöffnungsrandes aneinander anliegen, wenn die beiden Bauteile über wenigstens die Hälfte, vorzugsweise wenigstens 80% der Länge des Einführöffnungsrandes in Kontakt miteinander sind.

Bei einer hinsichtlich der auswählbaren Positionierung der beiden Bauteile bezüglich einander besonders vorteilhaften Ausgestaltung wird vorgeschlagen, dass die Einführbereich-Oberfläche wenigstens bereichsweise sphärisch ist oder die Form eines Ellipsoids oder eines Rotations-Ellipsoids aufweist. Dabei besteht die Möglichkeit, die beiden Bauteile nach Art einer Kugelgelenksverbindung bezüglich einander zu bewegen bzw. in die gewünschte Positionierung zu bringen, gleichwohl aber über einen wesentlichen Teil der Gesamtlänge des Einführöffnungsrandes einen Kontakt zwischen diesen beiden Bauteilen beizubehalten bzw. einzustellen.

Bei einer alternativen Ausgestaltungsart kann vorgesehen sein, dass die Einführbereich-Oberfläche wenigstens bereichsweise eine Zylinderfläche, vorzugsweise Kreiszylinderfläche, ist. Auch dies ermöglicht die Verschwenkung der Bauteile bezüglich einander bzw. die Positionierung in verschiedenen bezüglich einander verschwenkten Positionierungen.

Bei einer hinsichtlich der leichten Realisierung sowie auch der effizienten Durchführung des Schweißvorgangs besonders vorteilhaften Vorgehensweise wird vorgeschlagen, dass bei der Maßnahme a) die Einführöffnung durch Einbringen einer im Wesentlichen zylindrischen Aussparung in das erste Bauteil bereitgestellt wird, oder/und dass bei der Maßnahme c) der Einführbereich derart in die Einführöffnung eingeführt wird, dass die Einführbereich-Oberfläche an einer Einführrandkante des Einführöffnungsrandes anliegt.

Alternativ kann insbesondere zum Bereitstellen einer sehr stabilen Schweißverbindung vorgesehen sein, dass bei der Maßnahme a) die Einführöffnung mit einer an die Formgebung der Einführbereich-Oberfläche angepassten Randfläche des Einführöffnungsrandes bereitgestellt wird, oder/und dass bei der Maßnahme c) der Einführbereich derart in die Einführöffnung eingeführt wird, dass die Einführbereich-Oberfläche an einer Randfläche des Einführöffnungsrandes anliegt.

Die Einführöffnung kann beispielsweise materialabhebend, vorzugsweise durch Bohren, Schneiden, Fräsen, bereitgestellt werden. Alternativ kann die Einführöffnung durch Bereitstellen eines vorzugsweise zylinderförmigen Ansatzes an dem ersten Bauteil, vorzugsweise durch Umformen des ersten Bauteils, bereitgestellt werden. Ein derartiger Ansatz kann beispielsweise durch Umformen eines eine Öffnung umgebenden Wandungsbereichs des ersten Bauteils oder durch Anbringen, beispielsweise Anschweißen, eines den Ansatz bereitstellenden separaten Bauteils vorgesehen werden.

Eine insbesondere hinsichtlich der Positionierungsfreiheit der beiden Bauteile bezüglich einander besonders vorteilhafte Ausgestaltungsform kann vorsehen, dass eine Einführrandkante des Einführöffnungsrandes im Wesentlichen in einer Ebene liegt.

Bei einer alternativen Ausgestaltungsform kann das erste Bauteil rohrartig mit im Wesentlichen zylindrischer Außenumfangskontur ausgebildet sein, wobei eine Einführrandkante des Einführöffnungsrandes im Wesentlichen auf einer Zylinderfläche liegt. Es ist hier darauf hinzuweisen, dass das rohrartig ausgebildete Bauteil mit verschiedenen Querschnittsgeometrien, beispielsweise kreisrund, oval oder elliptisch, jedoch mit im Wesentlichen zylindrischer, sich also in Richtung einer Rohrlängsachse sich im Wesentlichen nicht verändernder Kontur ausgebildet sein kann.

Die Längsachse des zweiten Bauteils ist im Sinne der Erfindung eine ein bestimmtes Ausmaß an Symmetrie zum Ausdruck bringende Referenzlinie.

Bei dem erfindungsgemäßen Verfahren kann eine präzise Positionierung der beiden zu verschweißenden Bauteile ohne Beeinträchtigung der Qualität der herzustellenden Widerstandsschweißverbindung dadurch erreicht werden, dass der Schweißbereich des ersten Bauteils oder/und der Schweißbereich des zweiten Bauteils im Wesentlichen ohne Buckel, also die beim Widerstandsbuckelschweißen im Allgemeinen vorgesehenen buckelartigen Erhebungen, bereitgestellt wird.

Die vorliegende Erfindung wird nachfolgend mit Bezug auf die beiliegenden Figuren detailliert beschrieben. Es zeigt:
- Fig. 1: in Schnittdarstellung zwei in Kontakt mit Widerstandsschweißelektroden stehende, miteinander zu verschweißende Bauteile;
- Fig. 2: die Anordnung der Figur 1 in perspektivischer Ansicht;
- Fig. 3: in Schnittdarstellung zwei miteinander zu verschweißende Bauteile in flächigem Anlagekontakt;
- Fig. 4: in Schnittdarstellung zwei miteinander zu verschweißende Bauteile in linienartigem Anlagekontakt;
- Fig. 5: eine Seitenansicht eines mit einer Einführöffnung ausgebildeten, rohrartigen Bauteils;
- Fig. 6: ein mit dem Bauteil der Fig. 5 zu verschweißendes Bauteil;
- Fig. 7: eine Seitenansicht eines Bauteils mit elliptischem Querschnitt;
- Fig. 8: das Bauteil der Fig. 7, geschnitten längs einer Linie VIII-VIII in Fig. 7;
- Fig. 9: ein mit dem Bauteil der Fig. 7 zu verschweißendes Bauteil mit einer Einführöffnung.

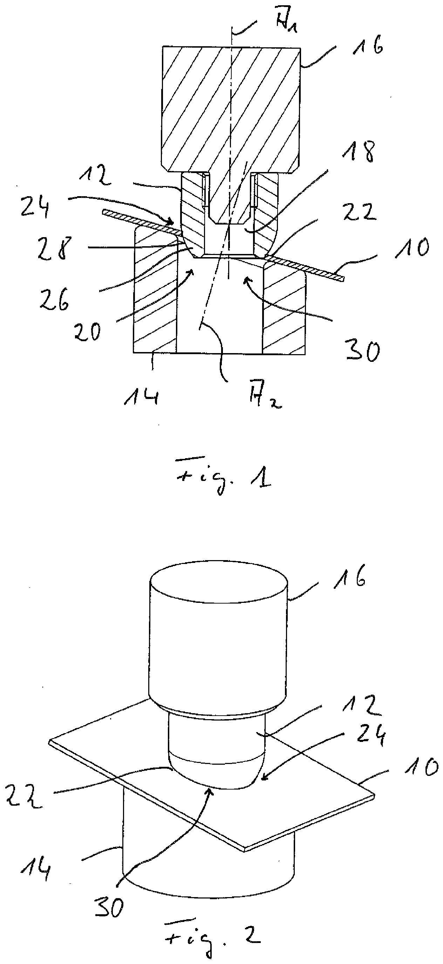

Die Fig. 1 zeigt zwei miteinander durch Widerstandsschweißen zu verbindende Bauteile 10, 12 mit den damit jeweils in Kontakt stehenden Schweißelektroden 14, 16. Das erste Bauteil 10 ist in Fig. 1 als im Wesentlichen plattenartiges bzw. ebenes Bauteil ausgebildet. Beispielsweise kann das erste Bauteil 10 ein Gehäuse bzw. ein Bereich eines Gehäuses einer Abgasbehandlungsanordnung, wie z. B. Katalysator, sein. Das zweite Bauteil 12 ist in dem in Fig. 1 dargestellten Beispiel ein Stutzen, der an dem Gehäuse bzw. ersten Bauteil 10 festzulegen ist. Das als Stutzen ausgebildete zweite Bauteil 12 weist eine beispielsweise mit Innengewinde ausgebildete Öffnung 18 auf, in welche eine Messsonde oder dergleichen eingeschraubt werden kann. Während des Widerstandsschweißvorgangs kann die Schweißelektrode 16 mit einem komplementär geformten Ansatz in die Öffnung 18 eingeführt sein.

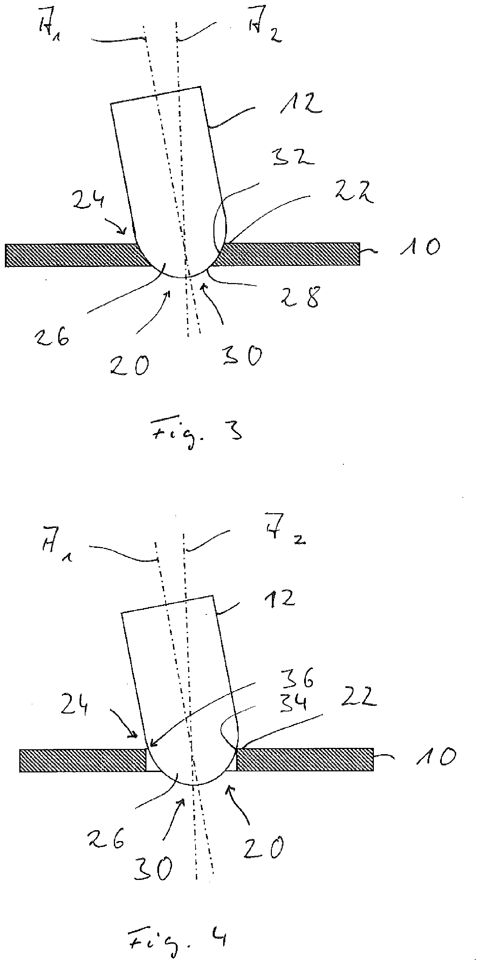

Wie in Fig. 3 detaillierter gezeigt, werden die beiden Bauteile 10, 12 so miteinander verbunden, dass eine Längsachse A₁ des in Richtung dieser Achse z.B. langgestreckten zweiten Bauteils 12 bzw. Stutzens bezüglich einer Achse A₂ einer im ersten Bauteil 10 ausgebildeten Einführöffnung 20 unter einem spitzen Winkel, dazu also nicht parallel verläuft. Ein die Einführöffnung 20 umgebender Randbereich 22 am ersten Bauteil 10 bildet einen Schweißbereich 24 des ersten Bauteils 10, an welchem ein an einem Einführbereich 26 des zweiten Bauteils 12 im Bereich einer Einführbereich-Oberfläche 28 bereitgestellter Schweißbereich 30 des zweiten Bauteils 12 durch Widerstandsschweißen festzulegen ist.

Bei dem in den Fig. 1 bis 3 dargestellten Ausgestaltungsbeispiel ist das zweite Bauteil 12 insbesondere in seinem Einführbereich 26 bzw. der dort vorgesehenen Einführbereich-Oberfläche 28 bezüglich der Längsachse A₁ im Wesentlichen rotationssymmetrisch ausgebildet, und insbesondere ist in diesem Ausgestaltungsbeispiel die Einführbereich-Oberfläche 28 mit im Wesentlichen konvexer, sphärischer Gestalt ausgebildet, was bedeutet, dass die Einführbereich-Oberfläche um zwei beispielsweise orthogonal aufeinander stehende Achsen gekrümmt ist.

Entsprechend dieser sphärischen bzw. gekrümmten Gestalt der Einführbereich-Oberfläche 28 kann auch das erste Bauteil 10 im Bereich des Einführöffnungsrandes 22 bzw. einer die Einführöffnung 20 direkt umgrenzenden bzw. dieser zugewandten Randfläche 32 sphärisch, jedoch konkav gekrümmt sein. Es besteht somit bei Einführen des Einführbereichs 26 in die Einführöffnung 20 ein im Wesentlichen flächiger Anlagekontakt zwischen der Einführbereich-Oberfläche 28 und der Randfläche 32. Die beiden Bauteile 10, 12 stehen somit durch den Kontakt zweier komplementär sphärisch geformter Flächen nach Art eines Kugelgelenks in Verbindung miteinander, so dass, ohne Verlust des gegenseitigen Kontaktes, das zweite Bauteil 12 bezüglich des ersten Bauteils 10 verschwenkt werden kann. Dies erlaubt es, die Längsachse A₁ geneigt bezüglich der Achse A₂ der Einführöffnung 20 anzuordnen, erforderlichenfalls aber auch parallel dazu anzuordnen. Es besteht grundsätzlich eine Freiheit bei der Auswahl der Positionierung des zweiten Bauteils 12 bezüglich des ersten Bauteils 10.

Beim Verbinden der Bauteile 10, 12 miteinander durch ein Widerstandsschweißverfahren, werden, z.B. nachdem die beiden Bauteile 10, 12 beispielsweise in der in Fig. 1 dargestellten Art und Weise mit den jeweils zugeordneten Schweißelektroden 14, 16 in Kontakt gebracht wurden, die beiden Bauteile 10, 12 in der für den Zusammenbau vorgesehenen Positionierung bezüglich einander angeordnet. Dabei liegt die Einführbereich-Oberfläche 28 idealerweise über den gesamten Umfang der Einführöffnung 20 bzw. des Randbereichs 22 an der Randfläche 32 an. Aufgrund möglicherweise nicht vermeidbarer Fertigungstoleranzen können Bereiche bestehen, in welchen zwischen den beiden Flächen 28, 32 ein geringfügiger spaltartiger Zwischenraum vorhanden ist.

Zur Durchführung des Schweißvorgangs werden die beiden Schweißelektroden 14, 16 mit einer Spannung beaufschlagt, so dass aufgrund des dann fließenden elektrischen Stroms und der dabei entstehenden Erwärmung der beiden Bauteile 10, 12 in ihren aneinander anliegenden Oberflächenbereichen die beiden Bauteile 10, 12 lokal aufgeschmolzen und somit miteinander verschweißt werden. Da im Wesentlichen über den gesamten Umfang des Einführöffnungsrandes 22 der Kontakt zwischen den beiden Bauteilen 10, 12 besteht, werden diese auch im Wesentlichen im Bereich der aneinander anliegenden Flächen 28, 32 miteinander verschweißt. Auch dort, wo geringfügige spaltartige Zwischenräume bestehen, wird aufgrund der Erwärmung des Aufbaumaterials der beiden Bauteile 10, 12 dieses aufgeschmolzen und eine Schweißverbindung realisiert, so dass diese Schweißverbindung um die Achse A₂ der Einführöffnung 20 unterbrechungsfrei umlaufend ausgebildet ist und insbesondere auch eine gasdichte, stabile Schweißverbindung entsteht. Das Bereitstellen von buckelartigen Erhebungen an wenigstens einem der beiden miteinander zu verschweißenden Bauteile, wie dies bei dem sogenannten Widerstandsbuckelschweißen im allgemeinen der Fall ist, ist bei der erfindungsgemäßen Vorgehensweise zur Erlangung einer unterbrechungsfreien, gasdichten Schweißverbindung nicht erforderlich.

Bei der in Fig. 3 dargestellten Ausgestaltung des Bauteils 10 kann die Einführöffnung 20 beispielsweise durch einen Kugelfräser im ersten Bauteil 10 realisiert werden. Der Krümmungsradius des Kugelfräsers bildet sich an der Randfläche 32 des Einführöffnungsrandes 22 ab und wird im Wesentlichen so gewählt, dass er dem Krümmungsradius der Einführbereich-Oberfläche 28 entspricht.

Bei einer in Fig. 4 dargestellten, alternativen Ausgestaltungsart ist die Einführöffnung 20 als im Wesentlichen zylindrisch ausgebildete Öffnung im ersten Bauteil 10 bereitgestellt. Beispielsweise kann diese Einführöffnung 20 durch Bohren, Schneiden, Stanzen oder dergleichen gebildet werden. Aufgrund der zylindrischen Ausgestaltung der Einführöffnung 20, bei welcher also die Randfläche 32 im Wesentlichen eine Zylinderfläche ist, beispielsweise mit kreisrunder Kontur, besteht zwischen dem mit seinem Einführbereich 26 zumindest geringfügig in die Einführöffnung 20 eingeführten zweiten Bauteil 12 und dem ersten Bauteil 10 im Wesentlichen kein flächiger Kontakt. Vielmehr liegt das zweite Bauteil 10 mit seiner Einführbereich-Oberfläche 28 an einer Einführrandkante 34 des Randbereichs 22 an. Es ist hier darauf hinzuweisen, dass die Einführöffnung 20 grundsätzlich zwei derartige Randkanten aufweist, wobei die in Fig. 4 auch dargestellte Einführrandkante 34 diejenige Randkante ist, mit welcher der Einführbereich 26 in Kontakt treten kann.

Auch bei dem in Fig. 4 dargestellten Ausgestaltungsbeispiel ist der Einführbereich 26 mit einer z.B. sphärischen Einführbereich-Oberfläche 28, also einer Oberfläche, die um zwei zueinander beispielsweise orthogonale Achsen gekrümmt ist, bereitgestellt, wobei aufgrund der sphärischen Gestalt der Krümmungsradius in allen Oberflächenbereichen gleich ist. Ist die Einführöffnung 20 mit kreisrunder Kontur bereitgestellt, so besteht idealerweise zwischen der Einführbereich-Oberfläche 28 und der Einführrandkante 34 ein um die Achse A₂ der Einführöffnung 20 unterbrechungsfrei umlaufender, im Wesentlichen linienartiger Anlagekontakt. Wie in Fig. 4 jedoch an der linken Seite der Einführöffnung 20 dargestellt, kann, beispielsweise bedingt durch Fertigungstoleranzen, in einigen Umfangsbereichen ein geringfügiger spaltartiger Zwischenraum 36 zwischen der Einführbereich-Oberfläche 28 und der Einführrandkante 34 auftreten. Wie vorangehend mit Bezug auf die Fig. 3 bereits dargelegt, wird aufgrund des geringen Abstands und der im Allgemeinen vergleichsweise geringen Umfangserstreckung derartiger spaltartiger Zwischenräume 36 bei Anlegen der zum Verschweißen erforderlichen Spannung bzw. bei Fließen des Schweißstroms auch in diesen Bereichen das Material der beiden Bauteile 10, 12 aufgeschmolzen und somit durch Verschweißung miteinander verbunden.

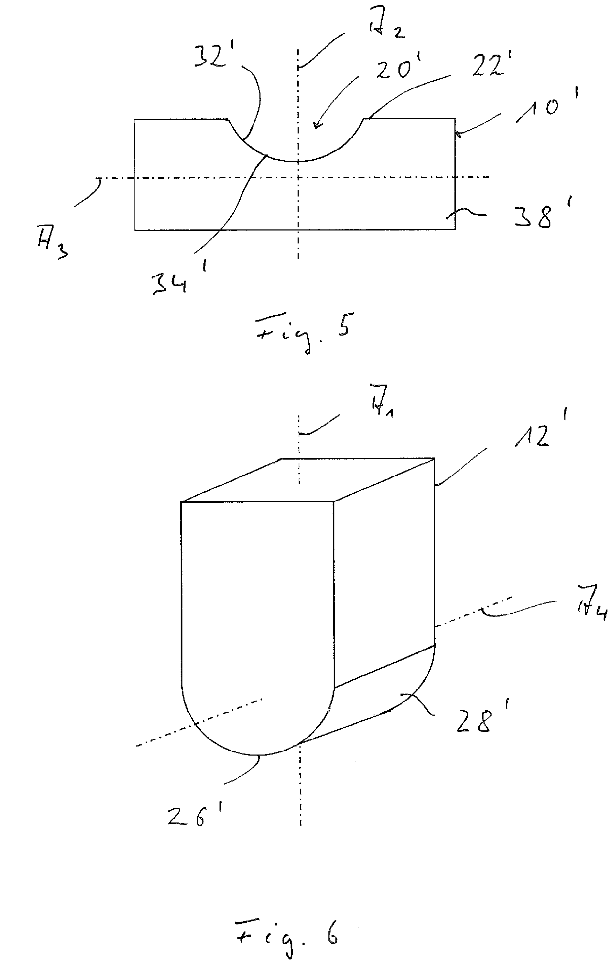

Die Fig. 5 und 6 zeigen eine alternative Ausgestaltungsart zweier miteinander zu verbindender Bauteile 10', 12'. Dabei kann das Bauteil 10' beispielsweise ein in Richtung einer Längsachse A₃ langgestrecktes Rohr sein, also eine im Wesentlichen zylindrische Gestalt aufweisen, beispielsweise mit kreisrunder Querschnittsgeometrie. In das erste Bauteil 10 kann beispielsweise durch einen Walzenfräser die Einführöffnung 20' eingebracht werden. Diese weist eine zur Längsachse A₃ des ersten Bauteils 10' im Wesentlichen orthogonal stehende Achse A₂ auf. Der Randbereich 22' der Öffnung 20' bzw. die Einführrandkante 34' sowie auch die Randfläche 32' liegen somit, anders als beim Ausgestaltungsbeispiel der Fig. 1 bis 4, nicht in einer Ebene, sondern sind, bedingt durch die gekrümmte Ausgestaltung des ersten Bauteils 10', ebenfalls gekrümmt. Insbesondere liegt die Einführrandkante 34' auf der zylindrischen Außenumfangsfläche 38' des ersten Bauteils 10'.

In Zuordnung zu dieser um die Achse A₂ ringartig umlaufenden, in Richtung der Achse A₂ der Einführöffnung 20' gekrümmten Gestalt des Randbereichs 22' weist das zweite Bauteil 12' eine komplementär geformte Einführbereich-Oberfläche 28' auf, die beispielsweise zur Krümmung des Randbereichs 22' komplementär gekrümmt ist, beispielsweise auch kreisartig gekrümmt ist. In diesem Ausgestaltungsbeispiel ist die Einführbereich-Oberfläche 28' um eine einzige Achse A₄ beispielsweise mit im Wesentlichen konstantem Krümmungsradius gekrümmt, wobei diese Achse A₄ die Einführbereich-Oberfläche nicht schneidet sondern dazu parallel ist.

Das zweite Bauteil 12' kann mit dem so geformten Einführbereich 26' in die Einführöffnung 20' eingesetzt werden, so dass die beispielsweise kreisartig gekrümmte, im Wesentlichen zylindrische Einführbereich-Oberfläche 28' in Kontakt mit dem entsprechend gekrümmten Randbereich 28' tritt. Je nachdem, wie die Einführöffnung 20' hergestellt wurde, entsteht dabei ein im Wesentlichen linienartiger Anlagekontakt mit der Einführrandkante 34' oder zumindest lokal ein flächiger Anlagekontakt an der Randfläche 32'.

Auch bei dieser Ausgestaltungsform können die beiden Bauteile 10', 12' durch Verschwenkung des zweiten Bauteils 12' um die Achse A₄ so positioniert werden, dass zwischen den beiden Achsen A₁ und A₂ erforderlichenfalls ein Winkel entsteht, das im Wesentlichen in Richtung der Längsachse A₁ langgestreckte zweite Bauteil 12' also nicht notwendigerweise orthogonal zur Längsachse A₃ des ersten Bauteils 10' angeordnet und so mit dem ersten Bauteil 10' verbunden werden muss. Auch hier besteht also eine Freiheit in der Positionierung des zweiten Bauteils 12' bezüglich des ersten Bauteils 10'.

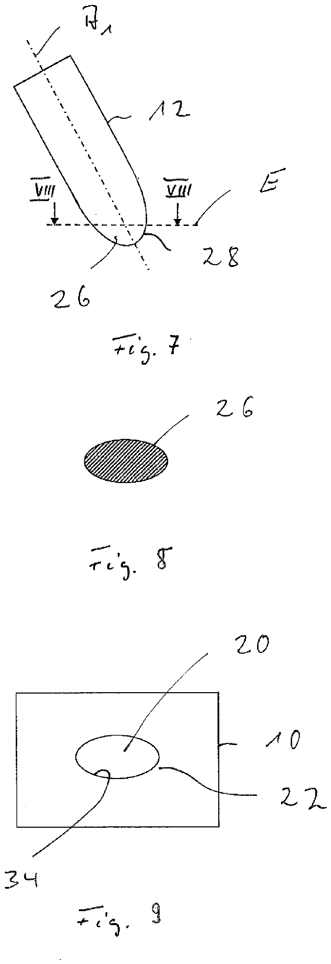

Eine weitere Ausgestaltungsform ist in den Fig. 7 bis 9 dargestellt. Diese entspricht hinsichtlich des grundsätzlichen Aufbaus der beiden Bauteile 10, 12 der mit Bezug auf die Fig. 1 bis 4 beschriebenen Ausgestaltung. Das erste Bauteil 10 kann also zumindest im Bereich der Einführöffnung 20 im Wesentlichen plan ausgebildet sein, so dass auch die Einführöffnung 20 bzw. der Randbereich 22 derselben in einer Ebene liegt. Das in Fig. 7 in Seitenansicht dargestellte zweite Bauteil 12 ist beispielsweise in Richtung der Längsachse A₁ langgestreckt ausgebildet. Anders als bei den Ausgestaltungsformen der Fig. 1 bis 4 ist das erste Bauteil 12 insbesondere in seinem Einführbereich 26 nicht mit zur Längsachse A₁ rotationssymmetrischer Einführbereich-Oberfläche 28 aufgebaut. Beispielsweise könnte das zweite Bauteil 12 zumindest in seinem Einführbereich 26 mit elliptischer Querschnittsgeometrie ausgebildet sein.

Wird das zweite Bauteil 12 in einer zur Längsachse A₁ desselben angewinkelten Ebene E geschnitten, so ergibt sich eine in Fig. 8 dargestellte, entsprechend auch elliptische Umfangskontur der Querschnittsfläche im Einführbereich 26. Wird mit entsprechendem Neigungswinkel der Längsachse A₁ das zweite Bauteil 12 bezüglich des ersten Bauteils 10 angeordnet, so kann in der vorangehend beschriebenen Art und Weise ein um die zur Zeichenebene der Fig. 9 orthogonal stehende Achse der Einführöffnung 20 im Wesentlichen vollständig umlaufender Anlagekontakt zwischen den beiden Bauteilen 10, 12 dann erreicht werden, wenn die Einführöffnung 20 im ersten Bauteil 10 eine zu der in Fig. 8 veranschaulichten Querschnittsgeometrie des Einführbereichs 26 komplementäre Form aufweist.

Dies bedeutet, dass erfindungsgemäß bei bekannter Geometrie des Einführbereichs 26 und auch bekanntem vorgesehenen Neigungswinkel des zweiten Bauteils 10 bezüglich des ersten Bauteils 12 die Formgebung der Einführöffnung 20 so gewählt werden kann, dass entsprechend auch der Verlauf des Einführöffnungsrandes 22 der Umfangskontur des zweiten Bauteils 12 in seinen mit dem ersten Bauteil 10 in Anlagekontakt tretenden Bereichs der Einführbereich-Oberfläche 28 entspricht. In der vorangehend beschriebenen Art und Weise kann bei Durchführung des Widerstandsschweißvorgangs dann eine für den gesamten Randbereich 22 unterbrechungsfrei durchlaufende Verschweißung der beiden Bauteile 10, 12 erreicht werden.

Da gleichwohl auch bei dieser Ausgestaltungsform das zweite Bauteil 12 im Bereich seiner Einführbereich-Oberfläche 28 um zwei Achsen gekrümmt ist, wenngleich mit über die Einführbereich-Oberfläche 28 variierendem Krümmungsradius, kann auch bei dieser Ausgestaltungsform das zweite Bauteil 12 in einem gewissen Variationsbereich bezüglich des ersten Bauteils 10 verschwenkt werden, ohne dass ein substantieller Verlust des gegenseitigen Anlagekontakts zwischen diesen beiden Bauteilen 10, 12 entsteht. Zwar kann dabei lokal ein spaltartiger Zwischenraum zwischen den beiden Bauteilen 10, 12 entstehen, der, wenn er ein bestimmtes Ausmaß in Umfangsrichtung nicht übersteigt, bei Beaufschlagen der beiden Bauteile 10, 12 mit der Schweißspannung bzw. bei fließendem Schweißstrom durch Aufschmelzen der beiden Bauteile 10, 12 gleichwohl verschlossen wird.

Die voranstehenden Ausführungen zeigen, dass bedingt dadurch, dass bei den beiden miteinander zu verbindenden Bauteilen dasjenige Bauteil, welches den Einführbereich mit der gekrümmten Einführbereich-Oberfläche aufweist, in diesem Einführbereich eine um zumindest eine Achse gekrümmte Oberfläche aufweist, bei Herstellung des Anlagekontakts dieses Bauteil mit dem Einführbereich immer geringfügig in die Einführöffnung des anderen Bauteils eintauchen wird. Aufgrund dieses gegenseitigen Eingriffs besteht selbst bei nichtsphärischer Gestaltung der aneinander anliegenden Oberflächen die Möglichkeit, eine Verschwenkung in zumindest geringem Winkelbereich durchzuführen, gleichwohl jedoch bei Durchführung eines Widerstandsschweißvorgangs einen unterbrechungsfreien Verlauf des so gebildeten Schweißverbindungsbereichs zu erreichen.

Diese Art der Verbindung der beiden Bauteile miteinander kann unabhängig von der Ausgestaltung insbesondere auch des ersten Bauteils erreicht werden. Dieses kann, wie in den verschiedenen Ausführungsform dargestellt, zumindest in dem Bereich, in welchem die Einführöffnung vorzusehen ist, plan ausgebildet sein, so dass entsprechend auch der Einführrandbereich bzw. eine Einführrandkante desselben in einer Ebene liegt. Alternativ kann in diesem Bereich das erste Bauteil gekrümmt sein. Die Einführöffnung am ersten Bauteil kann, wie vorangehend dargestellt, beispielsweise durch spanabhebende Bearbeitung, also beispielsweise Bohren, Fräsen oder Schneiden, erzeugt werden. Grundsätzlich ist es auch möglich, diese Öffnung durch Umformung des ersten Bauteils einen in Richtung der Achse der Öffnung sich beispielsweise zylindrisch erstreckendem Ansatz bereitzustellen. Eine Stirnfläche dieses Ansatzes kann dann beispielsweise mit der in Fig. 3 dargestellten Geometrie der Randfläche ausgebildet sein für den flächigen Anlagekontakt mit der Einführbereich-Oberfläche des zweiten Bauteils.

## Patentansprüche

1. Verfahren zum Verschweißen zweier Bauteile, vorzugsweise einer Abgasanlage einer Brennkraftmaschine, miteinander durch Widerstandsschweißen, umfassend die Maßnahmen:
a) Bereitstellen eines ersten Bauteils (10; 10') mit einer Einführöffnung (20; 20'), wobei die Einführöffnung (20; 20') von einem einen Schweißbereich (24; 24') des ersten Bauteils (10; 10') bereitstellenden Einführöffnungsrand (22; 22') umgeben ist,
b) Bereitstellen eines zweiten Bauteils (12; 12') mit einem in die Einführöffnung (20; 20') des ersten Bauteils (10; 10') einzuführenden Einführbereich (26; 26'), wobei das zweite Bauteil (12; 12') in Richtung einer Bauteillängsachse (A₁) langgestreckt ist und in einem Endbereich den Einführbereich (26; 26') aufweist, wobei eine Einführbereich-Oberfläche (28; 28') des Einführbereichs (26; 26') einen Schweißbereich (30; 30') des zweiten Bauteils (12; 12') bereitstellt, gekennzeichet durch
c) Einführen des Einführbereichs (26; 26') in die Einführöffnung (20; 20') derart, dass die Einführbereich-Oberfläche (28; 28') im Wesentlichen entlang des gesamten Einführöffnungsrandes (22; 22') an dem ersten Bauteil (10; 10') anliegt, und dass die Bauteillängsachse (A₁) nicht parallel zu einer Einführöffnungsachse (A₂) der Einführöffnung (20; 20') ist,
d) Anlegen einer elektrischen Spannung an die beiden Bauteile (10, 12; 10', 12') zum Widerstandsverschweißen des ersten Bauteils (10; 10') mit dem zweiten Bauteil (12; 12'),
wobei die Einführbereich-Oberfläche (28) um zwei zueinander nicht parallele Achsen gekrümmt ist oder um eine zur Einführbereich-Oberfläche (28') parallele Achse (A₄) gekrümmt ist, oder/und wobei eine Einführrandkante (34) des Einführöffnungsrandes (22') nicht in einer Ebene liegt.

2. Verfahren nach Anspruch 1, **dadurch gekennzeichnet, dass** die Einführbereich-Oberfläche (28) wenigstens bereichsweise sphärisch ist oder die Form eines Ellipsoids oder eines Rotations-Ellipsoids aufweist.

3. Verfahren nach Anspruch 1, **dadurch gekennzeichnet, dass** die Einführbereich-Oberfläche (28') wenigstens bereichsweise eine Zylinderfläche, vorzugsweise Kreiszylinderfläche, ist.

4. Verfahren nach einem der vorangehenden Ansprüche, **dadurch gekennzeichnet, dass** bei der Maßnahme a) die Einführöffnung (20) durch Einbringen einer im Wesentlichen zylindrischen Aussparung in das erste Bauteil (10) bereitgestellt wird, oder/und dass bei der Maßnahme c) der Einführbereich (26) derart in die Einführöffnung (20) eingeführt wird, dass die Einführbereich-Oberfläche (28) an einer Einführrandkante (34) des Einführöffnungsrandes (26) anliegt.

5. Verfahren nach einem der Ansprüche 1-3, **dadurch gekennzeichnet, dass** bei der Maßnahme a) die Einführöffnung mit einer an die Formgebung der Einführbereich-Oberfläche angepassten Randfläche des Einführöffnungsrandes bereitgestellt wird, oder/und dass bei der Maßnahme c) der Einführbereich derart in die Einführöffnung eingeführt wird, dass die Einführbereich-Oberfläche an einer Randfläche des Einführöffnungsrandes (26) anliegt.

6. Verfahren nach einem der vorangehenden Ansprüche, **dadurch gekennzeichnet, dass** die Einführöffnung (20; 20') materialabhebend, vorzugsweise durch Bohren, Schneiden, Fräsen, bereitgestellt wird.

7. Verfahren nach einem der vorangehenden Ansprüche, **dadurch gekennzeichnet, dass** die Einführöffnung durch Bereitstellen eines vorzugsweise zylinderförmigen Ansatzes an dem ersten Bauteil, vorzugsweise durch Umformen des ersten Bauteils, bereitgestellt wird.

8. Verfahren nach einem der vorangehenden Ansprüche, **dadurch gekennzeichnet, dass** eine Einführrandkante (24) des Einführöffnungsrandes (22) im Wesentlichen in einer Ebene liegt.

9. Verfahren nach einem der Ansprüche 1-6, **dadurch gekennzeichnet, dass** das erste Bauteil (10') rohrartig mit im Wesentlichen zylindrischer Außenumfangskontur ausgebildet ist, und dass eine Einführrandkante (34') des Einführöffnungsrandes (22') im Wesentlichen auf einer Zylinderfläche liegt.

10. Verfahren nach einem der vorangehenden Ansprüche, **dadurch gekennzeichnet, dass** der Schweißbereich (24; 24') des ersten Bauteils (10; 10') oder/und der Schweißbereich (30; 30') des zweiten Bauteils (12; 12') im Wesentlichen buckelfrei bereitgestellt wird.

## Claims

1. Method for welding together two components, preferably of an exhaust system of an internal combustion engine, by resistance welding, comprising the actions of:
a) providing a first component (10; 10') with an insertion opening (20; 20'), wherein the insertion opening (20; 20') is surrounded by an insertion opening edge (22; 22') providing a welding area (24; 24') of the first component (10; 10'),
b) providing a second component (12; 12') with an insertion area (26; 26') to be inserted into the insertion opening (20; 20') of the first component (10, 10'), wherein the second component (12; 12') is elongated in the direction of a component longitudinal axis (A₁) and comprises the insertion area (26; 26') in an end region, wherein an insertion area surface (28; 28') of the insertion area (26; 26') provides a welding area (30; 30') of the second component (12; 12'), **characterized by**
c) inserting the insertion area (26; 26') into the insertion opening (20; 20') such that the insertion area surface (28; 28') abuts at the first component (10; 10') essentially along the entire insertion opening edge (22; 22'), and such that the component longitudinal axis (A₁) is not parallel to an insertion opening axis (A₂) of the insertion opening (20; 20'),
d) applying an electrical voltage to the two components (10, 12; 10', 12') for resistance welding of the first component (10; 10') to the second component (12; 12'),
wherein the insertion area surface (28) is curved about two axes that are not parallel to one another or is curved about an axis (A₄) that is parallel to the insertion area surface (28'), or/and wherein an insertion border edge (34) of the insertion opening edge (22') is not in one plane.

2. Method in accordance with claim 1, **characterized in that** the insertion area surface (28) is spherical in at least some areas or has the shape of an ellipsoid or of a rotation ellipsoid.

3. Method in accordance with claim 1, **characterized in that** the insertion area surface (28') is a cylindrical surface, preferably a circular cylindrical surface, in at least some areas.

4. Method in accordance with one of the above claims, **characterized in that** in action a), the insertion opening (20) is provided by inserting an essentially cylindrical recess into the first component (10), or/and that in action c), the insertion area (26) is inserted into the insertion opening (20) such that the insertion opening surface (28) abuts at an insertion border edge (34) of the insertion opening edge (26).

5. Method in accordance with one of the claims 1-3, **characterized in that** in action a), the insertion opening is provided with an edge surface of the insertion opening edge adapted to the shape of the insertion area surface, or/and that in action c), the insertion area is inserted into the insertion opening such that the insertion area surface is in contact with an edge surface of the insertion opening edge (26).

6. Method in accordance with one of the above claims, **characterized in that** the insertion opening (20; 20') is prepared by removing material, preferably by drilling, cutting, [or] milling.

7. Method in accordance with one of the above claims, **characterized in that** the insertion opening is provided by providing a preferably cylindrical attachment on the first component, preferably by shaping of the first component.

8. Method in accordance with one of the above claims, **characterized in that** an insertion border edge (24) of the insertion opening edge (22) lies essentially in one plane.

9. Method in accordance with one of the claims 1-6, **characterized in that** the first component (10') has a tubular configuration with an essentially cylindrical outer circumferential contour and that an insertion edge surface (34') of the insertion opening edge (22') lies essentially on a cylindrical surface.

10. Method in accordance with one of the above claims, **characterized in that** the welding area (24; 24') of the first component (10; 10') or/and the welding area (30; 30') of the second component (12; 12') is provided essentially without projections.

## Revendications

1. Procédé de soudage de deux composants, de préférence d'un système d'échappement d'un moteur à combustion interne par soudage par résistance, comprenant les étapes suivantes:
a) fournir un premier composant (10; 10') avec une ouverture d'insertion (20, 20'), où l'ouverture d'insertion (20; 20') est entourée par un bord d'ouverture d'insertion (22; 22') prévoyant une région de soudage (24; 24') du premier composant (10; 10'),
b) fournir un deuxième composant (12; 12') avec une région d'insertion (26; 26') à être insérée dans l'ouverture d'insertion (20; 20') du premier composant (10, 10'), où le deuxième composant (12; 12') est allongé dans la direction d'un axe longitudinal de composant (A₁) et comprend la région d'insertion (26; 26') dans une région d'extrémité, où une surface de région d'insertion (28; 28') de la région d'insertion (26; 26') prévoit une région de soudage (30; 30') du deuxième composant (12; 12'), **caractérisé par**
c) insérer la région d'insertion (26; 26') dans l'ouverture d'insertion (20; 20') de sorte que la surface de région d'insertion (28; 28') est en contact avec le premier composant (10; 10') essentiellement le long du bord d'ouverture d'insertion entier (22; 22'), et de sorte que l'axe longitudinal de composant (A₁) n'est pas parallèle à un axe d'ouverture d'insertion (A₂) de l'ouverture d'insertion (20; 20'),
d) appliquer une tension électrique aux deux composants (10, 12; 10', 12') pour le soudage par résistance du premier composant (10; 10') au deuxième composant (12; 12'),
où la surface de région d'insertion (28) est courbée autour de deux axes qui ne sont pas parallèles ou est courbée autour d'un axe (A₄) qui est parallèle à la surface de région d'insertion (28') ou/et où une arête de bord d'insertion (34) du bord d'ouverture d'insertion (22') n'est pas dans un plan.

2. Procédé selon la revendication 1, **caractérisé en ce que** la surface de région d'insertion (28) est sphérique dans au moins quelques régions ou possède la forme d'un ellipsoïde ou d'un ellipsoïde de rotation.

3. Procédé selon la revendication 1, **caractérisé en ce que** la surface de région d'insertion (28') est une surface cylindrique, de préférence une surface cylindrique circulaire, au moins dans quelques régions.

4. Procédé selon une des revendications précédentes, **caractérisé en ce que** pendant l'étape a), l'ouverture d'insertion (20) est prévue en introduisant une encoche essentiellement cylindrique dans le premier composant (10), ou/et **en ce que** pendant l'étape c), la région d'insertion (26) est insérée dans l'ouverture d'insertion (20) de sorte que la surface d'ouverture d'insertion (28) est en appui contre une arête de bord d'insertion (34) du bord d'ouverture d'insertion (26).

5. Procédé selon une des revendications 1-3, **caractérisé en ce que** pendant l'étape a), l'ouverture d'insertion est prévue avec une surface de bord du bord d'ouverture d'insertion adaptée à la forme de la surface de la région d'insertion, ou/et **en ce que** pendant l'étape c), la région d'insertion est insérée dans l'ouverture d'insertion de sorte que la surface d'ouverture d'insertion est en appui contre une surface de bord du bord d'ouverture d'insertion (26).

6. Procédé selon une des revendications précédentes, **caractérisé en ce que** l'ouverture d'insertion (20; 20') est préparée en enlevant du matériau, de préférence par le perçage, le coupage [ou] le fraisage.

7. Procédé selon une des revendications précédentes, **caractérisé en ce que** l'ouverture d'insertion est prévue en prévoyant un raccordement de préférence cylindrique sur le premier composant, de préférence en formant le premier composant.

8. Procédé selon une des revendications précédentes, **caractérisé en ce qu'**une arête de bord d'insertion (24) du bord d'ouverture d'insertion (22) est située essentiellement dans un plan.

9. Procédé selon une des revendications 1-6, **caractérisé en ce que** le premier composant (10') a une configuration tubulaire avec un contour circonférentiel extérieur essentiellement cylindrique et **en ce qu'**une arête de bord d'insertion (34') du bord d'ouverture d'insertion (22') est située essentiellement sur une surface cylindrique.

10. Procédé selon une des revendications précédentes, **caractérisé en ce que** la région de soudage (24; 24') du premier composant (10; 10') ou/et la région de soudage (30; 30') du deuxième composant (12; 12') est prévue essentiellement sans projections.
